# EUROPEAN PATENT APPLICATION

(11) **EP 0 885 797 A1**
(43) Date of publication of application: **23.12.1998**
(21) Application number: 98304333.2
(22) Date of filing: 02.06.1998
(51) Int. Cl.: B62B 7/06

(54) **Foldable frame**

(30) Priority: 19.06.1997 GB 9712786
(71) Applicant: BRITAX-TEUTONIA Kinderwagenfabrik GmbH, D-32112 Hiddenhausen (DE)
(72) Inventor: Maxisch, Peter, 33106 Paderborn (DE)
(74) Representative: Hollinghurst, Antony

(57) **Abstract**

A foldable frame comprises a first tubular member (12) having a spring-loaded plunger (62) projecting axially from one end. A second tubular member (10) is pivotally coupled to the first tubular member (12) for relative angular movement between an erect position and a folded position. A bracket (36) is mounted on the second tubular member (10) and has a recess (86) positioned to be in alignment with the first tubular member (12) so as to be engageable by an outer end of said plunger (62) when the first and second tubular members (12, 10) are in the erect position. A push button (94) is located within the recess (86) so as to engage with the outer end of the plunger (62). Depression of the push button (94) pushes the plunger (62) out of the recess (86).

## Description

This invention relates to a foldable frame comprising a first tubular member having a spring-loaded plunger projecting from one end, a second tubular member pivotally coupled to the first tubular member for relative angular movement between an erect position and a folded position, a bracket mounted on the second tubular member and having a recess positioned to be in alignment with the first tubular member so as to be engageable by an outer end of said plunger when the first and second tubular members are in the erect position.

A foldable frame of this type is particularly suitable for use as the chassis of a folding pram, pushchair, stroller or the like. Such a frame is described in AU-B-29757/84, which has a relatively complex mechanism for displacing the plunger out of engagement with the bracket to allow the frame to be folded. The present invention aims to provide a foldable frame having a relatively simple mechanism for causing such disengagement.

According to the invention, a foldable frame of the type described above has manually operable release means located within the recess and adapted to engage with the outer end of the plunger so as to push the plunger out of the recess.

Preferably, the recess comprises an end portion of a hole extending through the bracket and the release means comprises a push button having an exposed surface accessible at the opposite end of the hole to the recess.

An embodiment of the invention will now be described, by way of example, with reference to the accompanying drawings in which:
Figure 1 is a side view of a foldable frame for a pram in accordance with the invention;
Figure 2 is a perspective view on an enlarged scale of a joint coupling two of the members of the frame shown in Figure 1;
Figure 3 is an exploded view of the joint shown in Figure 2;
Figure 4 is a partially broken-away perspective view of the joint shown in Figures 2 and 3, observed from a different angle; and
Figure 5 is a front view of a plunger assembly for the joint shown in Figures 2 to 4.

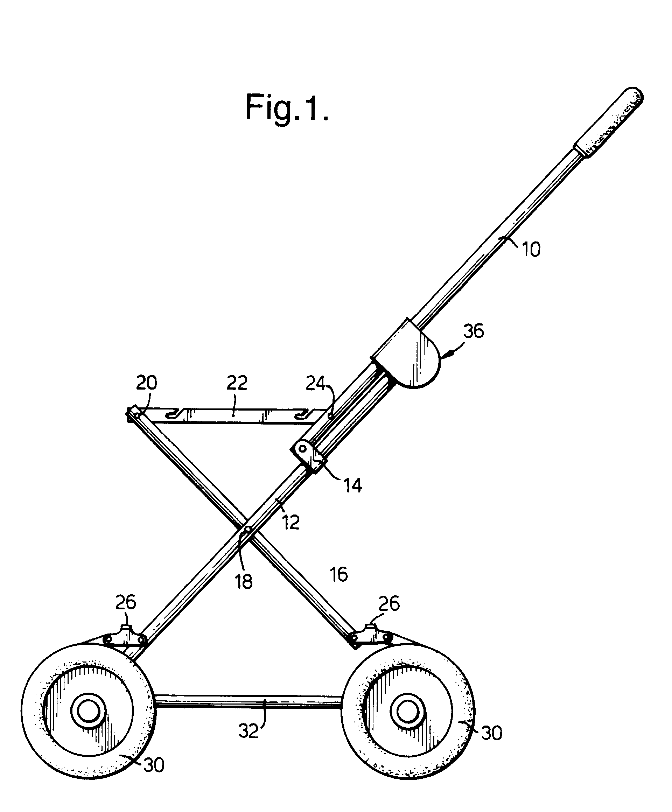

The pram frame shown in Figure 1 comprises a U-shaped handle 10, the end of each limb of which is connected to a respective tubular front leg 12 by a respective pivot joint 14. Each front leg 14 is coupled to a respective rear leg 16 by a respective pivot joint 18. The upper end of each front leg 12 is pivotally coupled by a pin 20 to a pram body support member 22, the rear end of which is pivotally coupled by a pin 24 to the corresponding limb of the handle 10. The lower end of each of the four 12, 16 is coupled by a respective suspension link 26 to a chassis 28 which carries a pair of front wheels 30 and a pair of rear wheels 32.

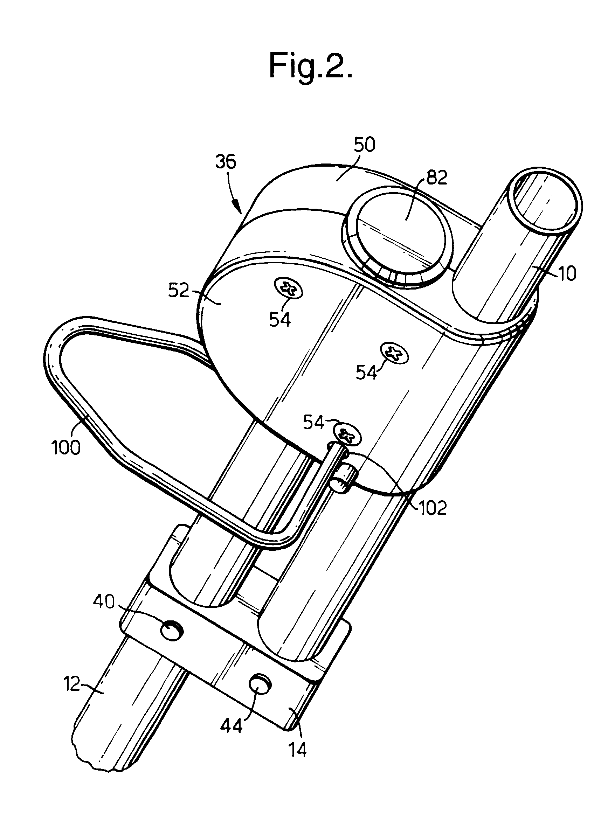

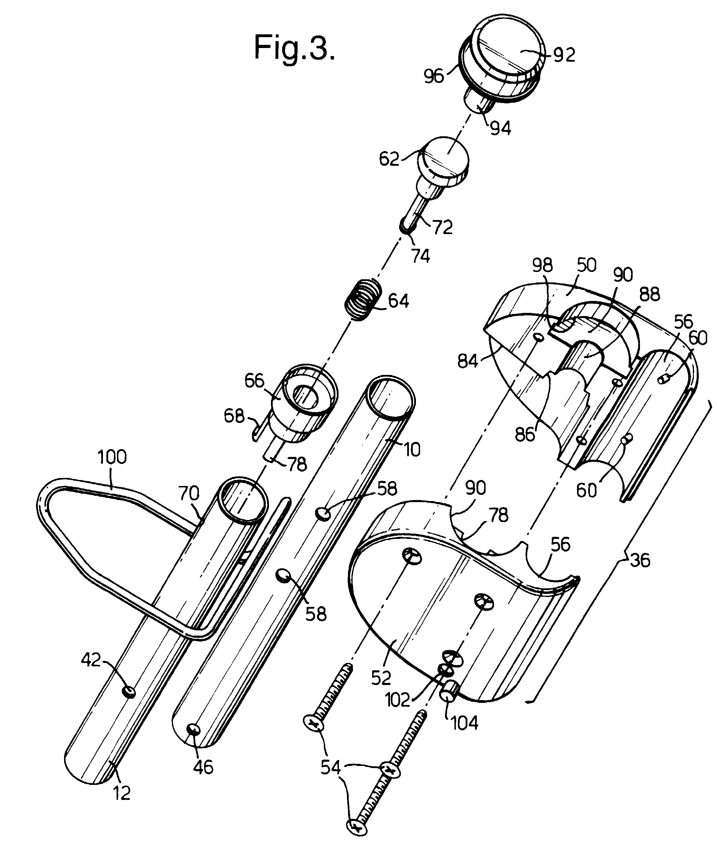

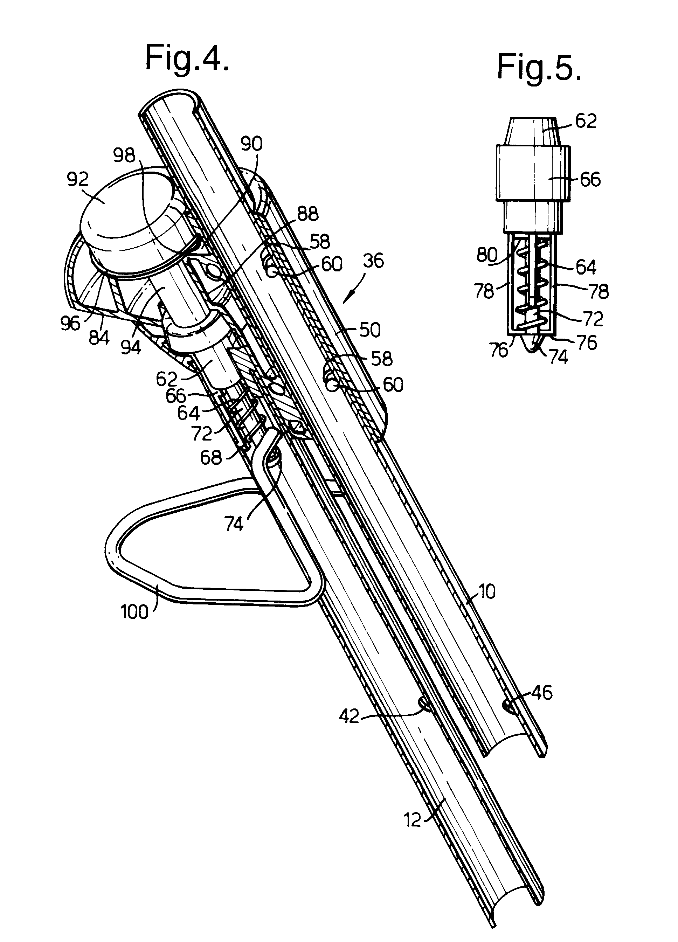

In accordance with the invention, when the pushchair is in its erect position as illustrated in Figure 1, each front leg 12 is secured in alignment with the corresponding limb of the handle 10 by a respective locking mechanism 36. The pivot joint 14 is secured to the front leg 12 by a peg 40 (Figure 2) extending through a hole 42 (Figures 3 and 4) and a pivot pin 44 extending through a hole 46 in the end of the corresponding limb of the handle 10.

The locking mechanism 36 has a case formed from two moulded parts 50 and 52 which are mirror images of one another and which are held together by three screws 54. Each of the two case halves 50 and 52 has a semicylindrical groove 56 for engagement round the corresponding end limb of the handle 10. In order to prevent movement of the mechanism 36 relative to the handle 10, the latter has two pairs of diametrically opposed holes 58 for reception of studs 60 on the cylindrical surface of each of the grooves 56.

As shown in Figures 3 to 5, a plunger assembly, comprising a plunger 62, a compression spring 64 and a holder 66, is fitted into the upper end of the front leg 12. The holder 66 is held in place by a resilient lug 68 which engages in a hole 70 in the leg 12. The plunger 62 has a stem 72 with a head 74 on its end. Respective claws 76 on a pair of resilient legs 78 engage behind the head 74 to limit outward movement of the plunger 62. The compression spring 64 engages between the claws 76 and a shoulder 80 on the plunger 62 at the top of the stem 72. The resilient legs 78 abut against the inside of the tubular front leg 12, to prevent disengagement of the claws 76 after assembly.

When the leg 12 is pivoted from its folded position to its erect position, the head of the plunger 62 slides along a guide surface 84 of each of the case halves 50 and 52 and snaps into a recess 86 so as to hold the leg 12 parallel to the handle 10.

A bore 88 links the recess 86 to an enlarged recess 90 in the top surface of the case halves 50 and 52. A push button has a head 92 which is received in the recess 90, and a stem 94 which extends through the bore 88. A flange 96 on the push button head 92 engages under a shoulder 98 on the wall of the recess 90 to limit outward movement. When the push button head 92 is pushed downwards, the stem 94 displaces the plunger 62 out of the recess 86, allowing the leg 12 to pivot out of alignment with the handle 10.

In order to prevent collapse of the frame, in the event of inadvertent depression of the push button head 92, a wire stirrup 100 has its ends received in respective holes 102 in each of the two case halves 50 and 52. The stirrup normally abuts against respective stops 104 adjacent to each of the holes 102 which hold the stirrup in the orientation shown in Figures 2 to 4, in which it restricts angular movement of the leg 12 relative to the handle 10. In order to fold the frame completely, it is necessary to pivot the stirrup 100 in the clockwise direction so as to allow the upper end of the leg 12 to pass underneath it. For prams and pushchairs, such a secondary locking device is required by safety regulations.

## Claims

1. A foldable frame comprising a first tubular member (12) having a spring-loaded plunger (62) projecting axially from one end, a second tubular member (10) pivotally coupled to the first tubular member (12) for relative angular movement between an erect position and a folded position, a bracket (36) mounted on the second tubular member (10) and having a recess (86) positioned to be in alignment with the first tubular member (12) so as to be engageable by an outer end of said plunger (62) when the first and second tubular members (12, 10) are in the erect position, characterised by manually operable release means (94) located within the recess (86) and adapted to engage with the outer end of the plunger (62) so as to push the plunger (62) out of the recess (86).

2. A foldable frame according to claim 1, wherein the recess (86) comprises an end portion of a hole (88) extending through the bracket (36) and the release means comprises a push button (94) having an exposed surface (92) accessible at the opposite end of the hole (88) to the recess (86).

3. A foldable frame according to claim 1 or 2, further comprising a catch member (100) pivotally mounted on the bracket (36) for angular movement between an engaged position in which it restricts angular movement of the first tubular member (12) from its engaged position and a release position in which it permits such angular movement to the folded position.
